# FASCICULE DE BREVET EUROPEEN

(11) **EP 2 571 705 B1**
(45) Date de publication et mention de la délivrance du brevet: **24.12.2014**
(21) Numéro de dépôt: 11730356.0
(22) Date de dépôt: 08.04.2011
(51) Int. Cl.: B60J 7/02, B60J 7/06

(54) **MODULE DE TOIT SOUPLE POUR VEHICULE AUTOMOBILE ET PROCEDE DE MONTAGE D'UN TEL MODULE DANS LE PAVILLON D'UN VEHICULE AUTOMOBILE**
FALTDACHMODUL FÜR KRAFTFAHRZEUG UND MONTAGEVERFAHREN FÜR EIN SOLCHES MODUL IM KRAFTFAHRZEUGDACH
SOFT TOP MODULE FOR VEHICLE AND ASSEMBLY METHOD FOR SUCH A MODULE INTO THE ROOF OF THE VEHICLE

(30) Priorité: 17.05.2010 FR 1053802
(43) Date de publication de la demande: 27.03.2013
(73) Titulaire: Peugeot Citroën Automobiles SA, 78140 Vélizy Villacoublay (FR)
(72) Inventeur: GUINOIS, Pascal, F-91680 Bruyeres Le Chatel (FR)
(74) Mandataire: Fosse, Danièle
(86) Numéro de dépôt international: PCT/FR2011/050806
(87) Numéro de publication internationale: WO 2011/144832

(56) Documents cités:
- DE-C- 908 572
- DE-C1- 4 106 493
- GB-A- 2 276 590

## Description

La présente invention concerne un module de toit souple pour véhicule automobile, destiné à être monté dans une ouverture du pavillon du véhicule.

L'invention concerne également un procédé de montage du module de toit souple dans une ouverture de pavillon du véhicule, ainsi qu'un véhicule automobile équipé d'au moins un toit souple installé à partir du module de toit souple.

Plus particulièrement, l'invention s'applique à une structure de toit souple représentée aux figures 1 à 3 et dont les composants essentiels sont décrits dans la demande de brevet français FR 09 51 697 déposée au nom de la demanderesse. Un tel toit est aussi décrit dans le document GB 2276590A.

Ces figures montrent ainsi que le toit souple comprend une toile 1 fixée entre une traverse avant 2 et une traverse arrière 3 faisant partie d'un mécanisme fixé dans une ouverture 8 réalisée dans le pavillon d'un véhicule automobile.

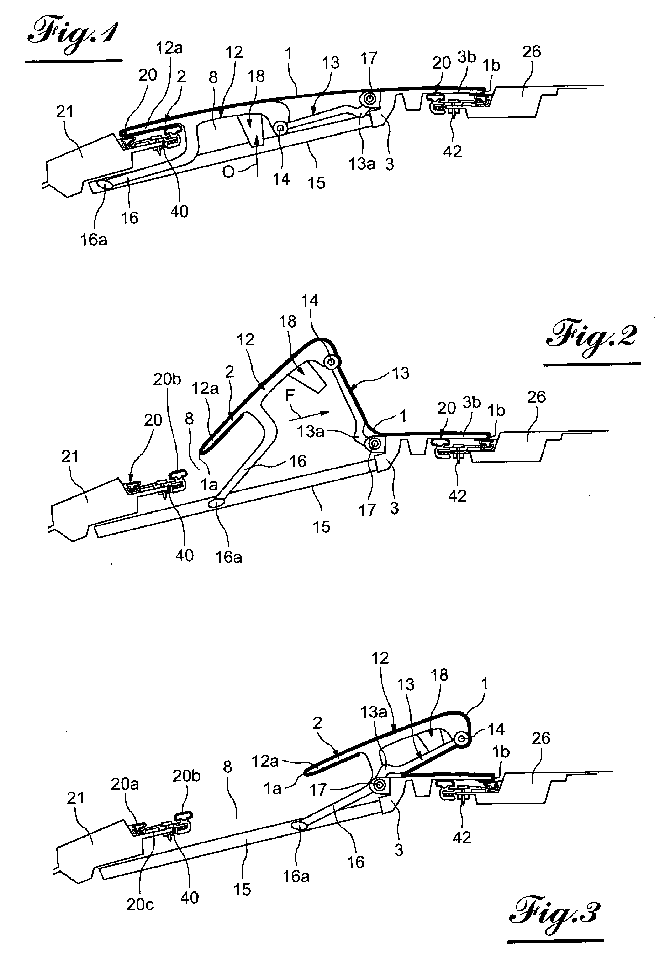

Ce mécanisme permet de déplacer la toile 1 entre une position dans laquelle la toile 1 est tendue comme représenté en figure 1 pour fermer l'ouverture 8 du pavillon et une position dans laquelle la toile 1 est repliée à l'arrière de l'ouverture 8 pour dégager cette dernière comme représenté en figure 3.

A cet effet, le mécanisme du toit souple comprend de chaque côté un premier et second leviers 12, 13 articulés l'un à l'autre suivant un axe 14 et qui s'étendent sous la toile 1. Le premier 12 de ces deux leviers supporte la traverse avant 2 à l'extrémité avant 12a de laquelle est fixé le bord avant 1a de la toile 1. Le bord arrière 1b de la toile 1 est fixé à l'extrémité arrière 3b de la traverse arrière 3.

Les deux leviers 12, 13 sont mobiles entre une première position de la figure 1 dans laquelle ils sont situés dans le prolongement l'un de l'autre et tendent la toile 1 et une seconde position de la figure 3 dans laquelle les deux leviers sont repliés l'un contre l'autre à l'arrière de l'ouverture 8, la toile 1 étant détendue et repliée autour des deux leviers 12, 13.

Le toit souple comprend également de chaque côté de l'ouverture 8 une glissière 15 pour guider le déplacement du premier levier 12 entre les première et seconde positions ci-dessus.

Chaque premier levier 12 comprend un bras 16 qui s'étend sous la traverse avant 2 et dont l'extrémité 16a est engagée dans la glissière 15 pour pouvoir coulisser dans celle-ci entre les première et seconde positions décrites précédemment.

L'extrémité arrière 13a de chaque second levier 13 est articulée sur la traverse arrière 3 suivant un axe 17 parallèle à l'axe 14 de l'articulation entre les deux leviers 12, 13 et qui est perpendiculaire à la glissière 15.

Le toit souple comprend également un verrou 18 situé sur chacun des côtés longitudinaux du toit souple, qui peut être actionné manuellement sur la face intérieure du toit et coopérant avec la glissière correspondante 15 pour maintenir le toit dans sa première position fermée.

Lorsque les deux premiers leviers 12 sont dans la première position de fermeture de l'ouverture 8 du pavillon de la figure 1, la traverse avant 2, qui est supportée par chacun des deux premiers leviers 12, et la traverse arrière 3 prennent appui sur un joint périphérique d'étanchéité 20 fixé dans une feuillure périphérique 30 dont les parties transversales au véhicule sont formées respectivement dans la traverse avant 21 et arrière 26 du pavillon.

Pour ouvrir le toit souple, il suffit d'appuyer sur les deux verrous 18 dans le sens de la flèche O de la figure 1 pour les libérer par rapport aux glissières 15. Ensuite, le toit souple est tiré vers l'arrière dans le sens de la flèche F de la figure 2 depuis l'intérieur du véhicule en agissant manuellement sur la traverse avant 2.

Lors de ce déplacement, l'extrémité 16a du bras 16 du levier 12 coulisse dans la glissière correspondante 15, le levier 12 pivote autour de l'articulation 14 qui le relie au levier 13 et ce dernier pivote autour de l'articulation 17.

En fin de course, le levier 12 est complètement replié sur le levier 13 et l'ensemble est en appui sur la traverse arrière 26 du pavillon comme représenté en figure 3.

La toile 1 qui suit le pivotement des leviers 12 et 13 se replie autour de ce dernier et est pincée contre la traverse arrière 26 du pavillon comme le montre également la figure 3.

Pour permettre le transport du toit souple et son montage dans l'ouverture 8 du pavillon du véhicule, les différents composants du toit souple décrits ci-dessus sont assemblés préalablement sous la forme d'un module garantissant la géométrie du mécanisme de déplacement de la toile entre ses positions de fermeture de l'ouverture 8 du pavillon et de dégagement de cette ouverture.

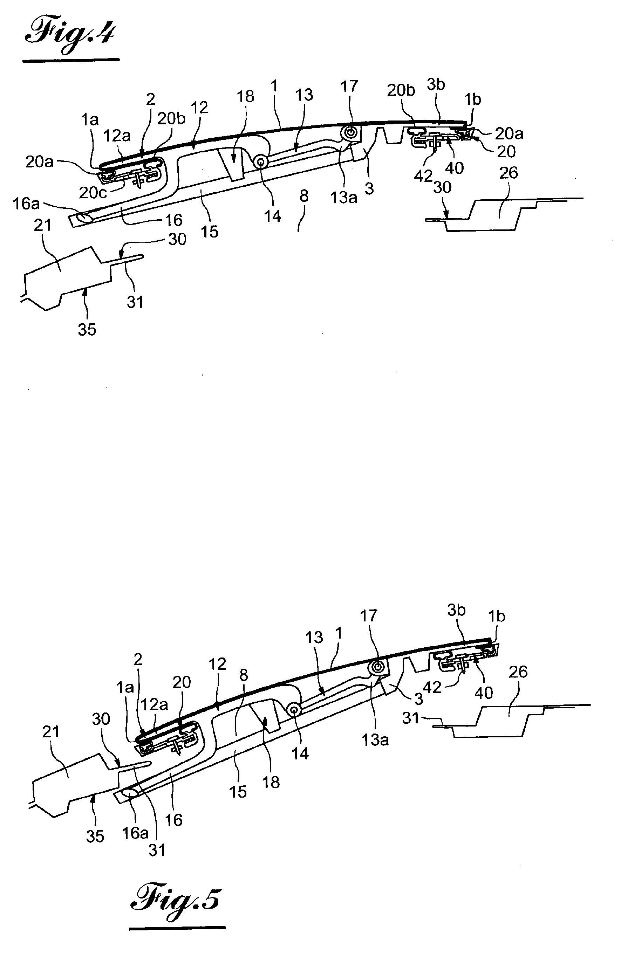

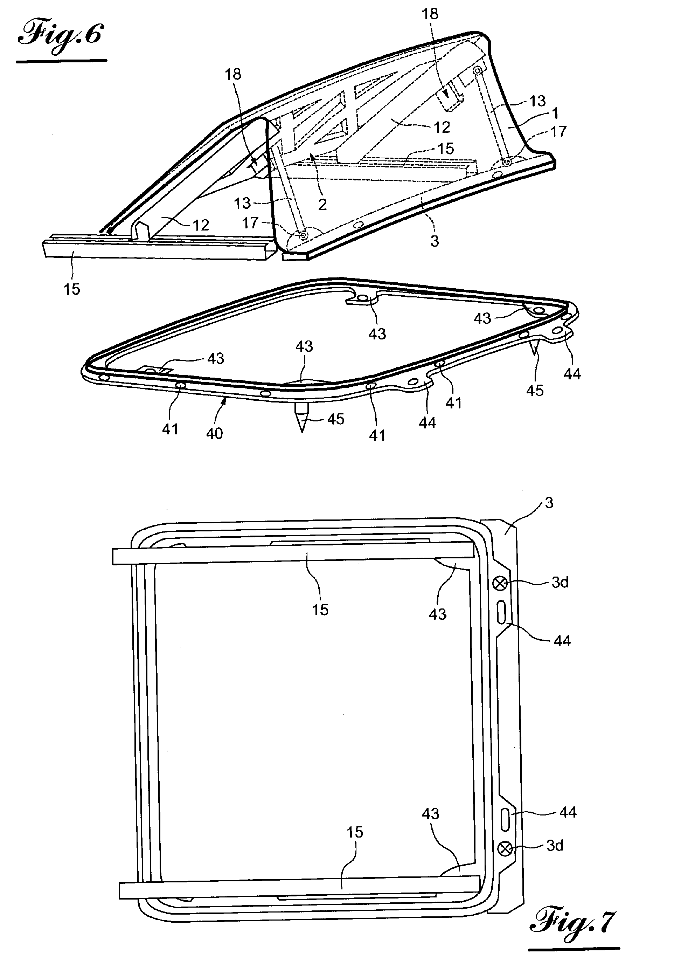

Ce module est visible plus particulièrement aux figures 4 à 8 à considérer en liaison avec les figures 1 à 5.

Comme représenté, le module comprend un cadre plat 40 de forme générale rectangulaire réalisé de préférence en une matière plastique rigide et qui comprend une pluralité de perçages 41 traversant sa paroi périphérique et au travers desquels peuvent être engagées des vis 42 permettant la fixation du cadre 40 sur la paroi de bord périphérique 31 délimitant l'ouverture 8 du pavillon ainsi que la feuillure supérieure 30. Le joint périphérique d'étanchéité 20 est constitué de deux parties externe 20a et interne 20b chaussant respectivement les bords périphériques externe et interne du cadre 40 et un joint en matériau mousse adhésive 20c est fixé dans une rainure formée dans la face inférieure du cadre 40. En position assemblée du cadre 40 au pavillon du véhicule, le joint périphérique 20 est logé dans la feuillure périphérique supérieure 30.

Le module comprend également les deux glissières 15 fixées parallèlement l'une à l'autre sur le cadre 40 par des vis de fixation, par exemple au nombre de deux pour chaque glissière 15, et ancrées à des pattes internes 43 du cadre 40. Au besoin, chaque glissière 15 peut comporter au moins un pion d'indexation de la glissière au cadre 40.

En outre, la traverse arrière 3 est fixée au cadre 40 par l'intermédiaire de vis de fixation, par exemple au nombre de 2, ancrées à deux pattes externes 44 du cadre 40. La traverse arrière 3 peut également comporter deux pions d'indexation 3d traversant respectivement deux orifices du cadre 40 qui lui même comporte deux pions d'indexation 45 s'engageant respectivement dans deux orifices de la partie de paroi 31 s'étendant le long de la traverse arrière 26 du pavillon.

Comme représenté aux figures 4 et 5, pour monter le toit souple dans l'ouverture 8 du pavillon du véhicule, le module à cadre de support ci-dessus décrit est disposé au-dessus de l'ouverture 8, puis est incliné de haut en bas à partir de la traverse arrière 3 pour disposer la partie avant des glissières 15 dans une feuillure inférieure 35 de la traverse avant du pavillon. Ensuite, à partir de la position inclinée représentée en figure 5, le module est basculé vers le bas de manière à amener le cadre 40 en appui sur la paroi 31 bordant l'ouverture 8 du pavillon et à loger le joint périphérique 20 dans la feuillure supérieure périphérique 30. Ensuite, le cadre 40 est fixé à la paroi périphérique 31 par les vis de fixation 42, solidarisant ainsi le toit souple au pavillon du véhicule.

Il est à noter que le module à cadre de support est monté au pavillon du véhicule en ayant les leviers 12, 13 fixés en position alignés les uns par rapport aux autres aux glissières 15 par les verrous 18 de sorte que les traverses avant 2 et arrière 3 sont en appui d'étanchéité sur les joints externe 20a et interne 20b du joint périphérique 20.

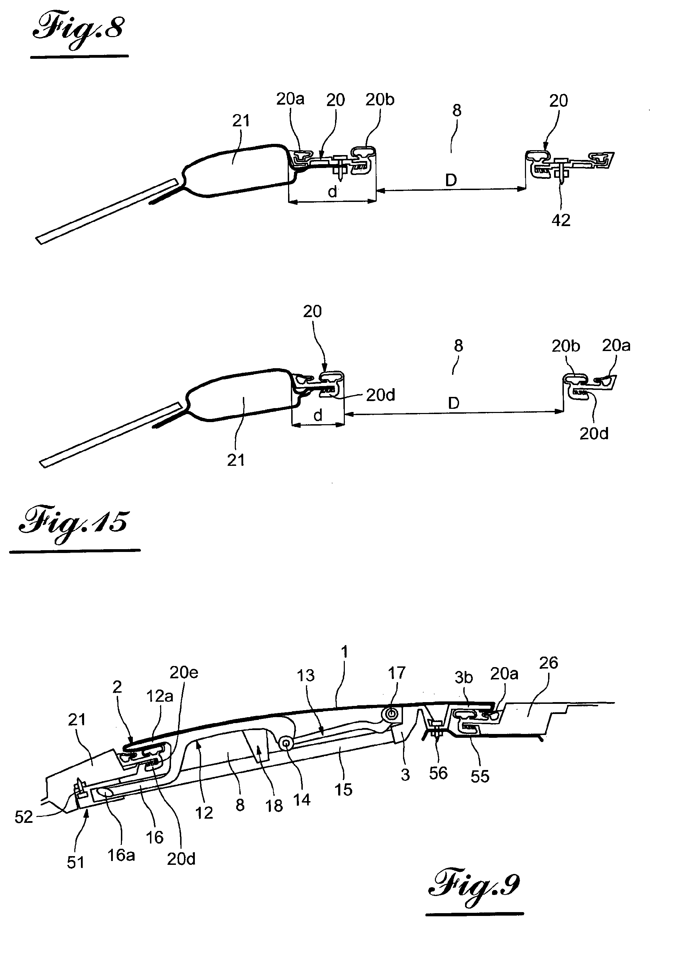

Cette solution de montage d'un toit souple au pavillon du véhicule présente les inconvénients suivantes :
- l'utilisation du cadre 40 de support des composants du toit souple occasionne un encombrement réduisant fortement les dimensions de l'ouverture 8 du pavillon. En effet, comme cela ressort mieux de la figure 8, le cadre 40 a sa paroi périphérique fixée sur la paroi périphérique 31 bordant l'ouverture 8 ayant une largeur relativement importante pour permettre sa fixation à la paroi 31 par les vis 42 et supporter les deux joints périphériques externe 20a et interne 20b du joint 20, réduisant la dimension D de l'ouverture 8 aussi bien en direction transversale qu'en direction longitudinale du véhicule. A titre d'exemple, le joint périphérique interne 20b peut faire saillie dans l'ouverture 8 d'une distance d d'environ 55mm par rapport au joint périphérique externe 20a en appui d'étanchéité sur la feuillure supérieure 30 ;
- compte tenu du nombre relativement important de vis de fixation à prévoir pour fixer le cadre 40 au pavillon du véhicule et les glissières 15 au cadre 40, le temps de montage du module du pavillon est augmenté ;
- l'utilisation du cadre 40, des vis de fixation de ce cadre au pavillon du véhicule et des glissières 15 au cadre 40, des pions d'indexation des glissières 15 relativement au cadre 40 et de la traverse arrière 3 relativement à ce cadre ainsi que les trois joints 20a, 20b et 20c augmentent la masse du module ainsi que le coût de celui-ci.

La présente invention a pour but de remédier aux inconvénients ci-dessus du module de toit souple à cadre de support en proposant une solution de module de toit souple moins encombrante, plus légère et moins coûteuse tout en garantissant un bon fonctionnement des composants du toit souple une fois le module monté au pavillon du véhicule.

Ce but est atteint, selon l'invention, grâce à un module de toit souple pour véhicule automobile, destiné à être monté dans une ouverture du pavillon du véhicule, et qui est caractérisé en ce qu'il comprend deux paires latérales de premiers et seconds leviers, les premier et second leviers de chaque paire étant articulés l'un à l'autre, une traverse arrière destinée à être fixée au voisinage du bord arrière transversal de l'ouverture du pavillon, deux glissières parallèles ayant deux de leurs extrémités fixées respectivement aux deux extrémités de la traverse arrière, deux sabots solidaires respectivement des deux autres extrémités des deux glissières et destinés à être fixés en-dessous du bord avant transversal de l'ouverture du pavillon, et en ce que le premier levier de chaque paire de premier et second leviers est engagé à coulissement dans l'une correspondante des deux glissières tandis que le second levier de chaque paire de premier et second leviers est monté articulé à une extrémité correspondante de la traverse arrière.

De préférence, les premiers leviers des deux paires des premiers et seconds leviers sont reliés l'un à l'autre par une traverse avant.

Avantageusement, la traverse arrière comprend deux pions d'indexation pouvant être insérés dans deux perçages d'une paroi du pavillon située sensiblement au même niveau que la paroi de bord arrière transversal de l'ouverture du pavillon.

Au moins l'un des deux sabots comprend un pion d'indexation pouvant être inséré dans un perçage du pavillon situé à proximité de la paroi de bord avant transversal de l'ouverture du pavillon.

De préférence, le moyen de fixation de chaque glissière à la traverse arrière comprend un pion solidaire de l'extrémité de la glissière et emmanché à force dans un perçage de l'extrémité de la traverse arrière.

La traverse arrière du module peut être fixée à une paroi du pavillon située sensiblement au même niveau que la paroi de bord arrière transversal de l'ouverture du pavillon par deux vis de fixation et chaque sabot peut être fixé au pavillon à proximité de la paroi de bord avant transversal de l'ouverture du pavillon par une vis de fixation.

Les premier et second leviers de chaque paire de premiers et seconds leviers occupent une position dans laquelle ces leviers sont situés dans le prolongement l'un de l'autre et sont verrouillés à cette position à la glissière correspondante par un verrou manoeuvrable manuellement.

Le module comprend une toile recouvrant les premiers et seconds leviers des deux paires et dont le bord avant est fixé aux extrémités avant des premiers leviers et le bord arrière est fixé à la traverse arrière.

L'invention vise également un procédé de montage du module de toit souple, tel que défini précédemment, dans une ouverture du pavillon d'un véhicule automobile, et qui est caractérisé en ce qu'il consiste à fixer un joint périphérique d'étanchéité à la paroi de bord périphérique de l'ouverture du pavillon, présenter le module au-dessus de l'ouverture du pavillon, basculer vers le bas les sabots des glissières pour permettre le passage des sabots sous la paroi de bord avant transversal de l'ouverture du pavillon, engager le pion d'indexation de l'un des sabots dans un perçage du pavillon situé à proximité de la paroi de bord avant transversal, basculer vers le bas la traverse arrière de manière à engager les pions de cette traverse dans des perçages d'une paroi du pavillon située sensiblement au même niveau que la paroi de bord arrière transversal de l'ouverture du pavillon et amener les traverses avant et arrière en appui sur le joint d'étanchéité, et fixer les sabots et la traverse arrière au pavillon.

Avantageusement, les sabots des glissières sont fixés dans une feuillure inférieure d'une traverse arrière avant du pavillon et la traverse arrière du module est fixée à la paroi transversale fixée sous une traverse arrière du pavillon.

Ce joint périphérique d'étanchéité est logé dans une feuillure périphérique supérieure bordant l'ouverture du pavillon.

Lors du montage du module, les premier et second leviers de chaque paire de leviers sont verrouillés dans leur position en prolongement l'un de l'autre à la glissière correspondante par le verrou.

L'invention vise également un véhicule automobile dont le pavillon est équipé d'au moins un toit souple installé à partir du module de toit souple tel que défini précédemment.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans desquels :
- la figure 1 est une vue en coupe longitudinale partielle du pavillon d'un véhicule automobile sur lequel est monté un toit souple à cadre de support et occupant une position fermée ;
- la figure 2 est une vue analogue à la figure 1 et montrant la phase d'ouverture partielle du toit souple ;
- la figure 3 est une vue analogue à la figure 2 et montrant le toit souple en position complètement ouverte ;
- la figure 4 est une vue analogue à la figure 1 et montrant le module de toit souple à cadre de support avant montage sur le pavillon du véhicule ;
- la figure 5 est une vue analogue à la figure 4 et montrant le module de toit souple en position inclinée intermédiaire de montage sur le pavillon du véhicule ;
- la figure 6 est une vue en perspective éclatée du module de toit souple à cadre de support avant montage sur le pavillon du véhicule ;
- la figure 7 est une vue de dessus du module de toit souple de la figure 6 en position assemblée sans le mécanisme de leviers articulés ;
- la figure 8 est une vue en coupe longitudinale partielle du pavillon du véhicule automobile sur lequel est monté uniquement le cadre avec ses deux joints d'étanchéité périphériques du module de toit souple à cadre de support ;
- la figure 9 est une vue en coupe longitudinale partielle du pavillon d'un véhicule automobile sur lequel est monté un toit souple selon l'invention et occupant une position fermée ;

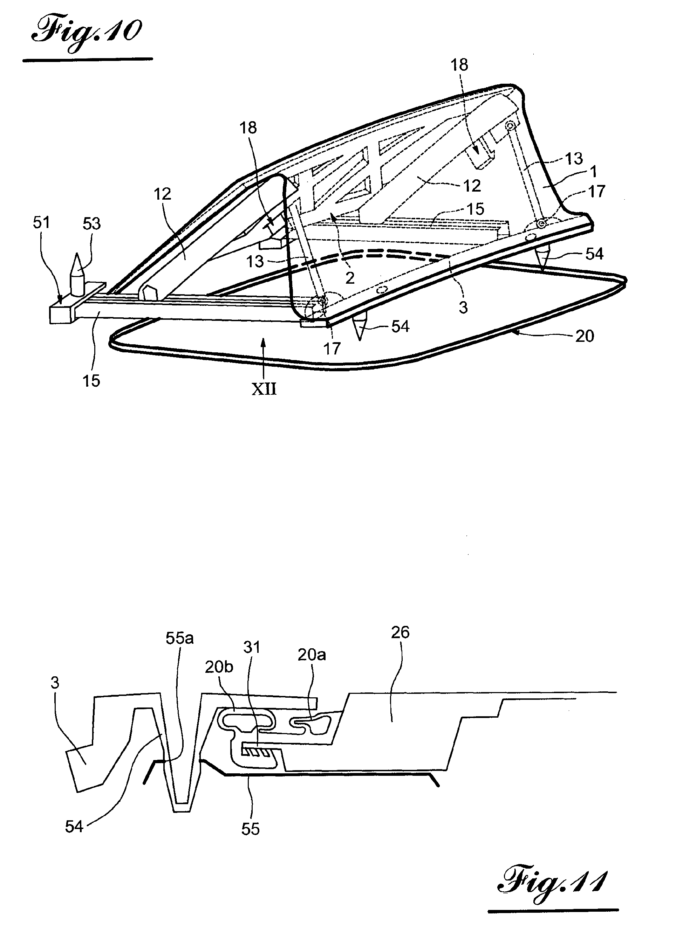

- la figure 10 est une vue en perspective éclatée du module de toit souple conforme à l'invention ;
- la figure 11 est une vue en coupe longitudinale partielle du pavillon du véhicule montrant l'indexation de la traverse arrière du module de la figure 10 relativement à la traverse arrière du pavillon ;

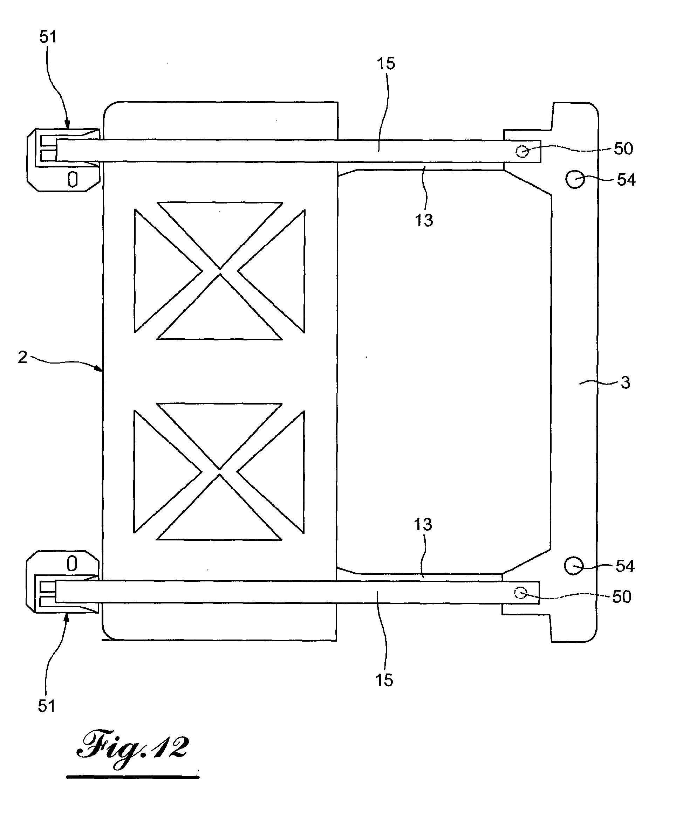

- la figure 12 est une vue suivant la flèche XII de la figure 10 ;
- la figure 13 est une vue analogue à la figure 9 et montrant le module de toit souple de l'invention suivant une première phase de montage sur le pavillon du véhicule ;
- la figure 14 est une vue semblable à celle de la figure 13 et montrant le module de toit souple de l'invention à une phase suivante de montage sur le pavillon du véhicule ; et
- la figure 15 est une vue en coupe analogue à la figure 8 et montrant le faible encombrement du module de toit souple de l'invention dans l'ouverture du pavillon du véhicule.

L'invention va être décrite en référence aux figurés 9 à 15 montrant notamment un module de toit souple permettant le montage d'un toit souple sur le pavillon d'un véhicule automobile sans utiliser de cadre de support.

Le mécanisme de ce module de toit souple comprenant la paire de premier et second leviers 12, 13 situés de chaque côté du toit souple sous la toile 1, les deux glissières 15, les deux verrous 18 et les traverses avant 2 et arrière 3, et permettant de déplacer la toile 1 entre une position dans laquelle la toile est tendue pour fermer l'ouverture 8 du pavillon et une position dans laquelle la toile 1 est repliée à l'arrière de l'ouverture 8 pour dégager cette ouverture, est identique au mécanisme précédemment décrit en référence aux figures 1 à 3.

Pour cette raison, la description détaillée de ce mécanisme ne sera pas reprise.

Les différents éléments du toit souple et du pavillon du véhicule qui seront repris dans la description qui suit, identiques et accomplissant la même fonction de ceux décrits en référence notamment aux figures 1 à 3 portent les mêmes références.

Selon le module de toit souple de l'invention, les deux glissières parallèles 15, dans lesquelles peuvent coulisser les extrémités 16a des bras 16 des deux premiers leviers 12, ont deux de leurs extrémités situées d'un même côté fixées respectivement au voisinage des deux extrémités de la traverse arrière 3 du toit souple.

A cet effet, l'extrémité de chaque glissière 15 comporte un pion d'indexation 50 emmanché à force dans un perçage de la traverse arrière 3. En variante, l'extrémité de chaque glissière 15 peut être fixée à la traverse 3 en l'emmanchant dans un orifice conjugué situé à l'extrémité de la traverse 3 et d'axe perpendiculaire à cette traverse.

Comme pour le mécanisme précédemment décrit, les deux seconds leviers 13 s'étendant respectivement dans deux plans parallèles aux glissières 15 sont articulés chacun à la traverse 3 par un axe d'articulation 17 perpendiculaire aux glissières 15.

Le module comprend en outre deux sabots 51 solidaires respectivement des deux autres extrémités des glissières 15 et qui peuvent être fixés dans la feuillure inférieure 35 de la traverse avant 21 du pavillon, située sous la paroi de bord avant transversal 31 de cette traverse délimitant une partie de l'ouverture 8, du pavillon. La fixation de chaque sabot 51 d'une glissière 15 à la traverse avant 21 du pavillon peut être assurée par une vis de fixation 52.

Au moins l'un des deux sabots 51 comporte un pion d'indexation 53 pouvant être inséré dans un perçage de la feuillure 35 de la traverse avant 21 du pavillon et situé à proximité de la paroi de bord avant transversal 31 de l'ouverture 8 du pavillon. Le pion d'indexation 53 s'étend perpendiculairement à la glissière correspondante 15.

La traverse arrière 3 du module comprend deux pions parallèles d'indexation 54 s'étendant d'un même côté de la traverse perpendiculairement à celle-ci et qui peuvent être insérés respectivement dans deux perçages 55a d'une paroi en forme de plaque 55 fixée sous la traverse arrière 26 du pavillon sensiblement au même niveau que la partie de paroi 31 solidaire de la traverse 26 et constituant le bord transversal arrière de l'ouverture 8 du pavillon. Le perçage 55a d'ancrage de chaque pion d'indexation 54 de la traverse 3 du module est formé dans la partie d'extrémité transversale de la plaque 55 s'étendant dans l'ouverture 8 du pavillon.

En outre, la traverse arrière 3 peut être fixée à la partie d'extrémité transversale de la paroi 55 s'étendant dans l'ouverture 8 par deux vis de fixation 56, dont une seule est représentée.

De préférence, le module de toit souple se présente avant montage dans l'ouverture 8 du pavillon avec les premier et second leviers 12, 13 de chaque paire de levier occupant une position dans laquelle ces leviers sont situés dans le prolongement l'un de l'autre et sont verrouillés à cette position à la glissière correspondante 15 par le verrou associé 18 actionnable manuellement de l'intérieur du toit souple, et ce dans le but de faciliter le stockage de ce module, de le transporter facilement et de faciliter son montage au pavillon du véhicule.

La traverse arrière 3 du module de toit souple à laquelle sont fixées les glissières 15 et les paires latérales de leviers 12, 13 assemblées entre la traverse arrière 3 et les glissières 15 garantissent l'entraxe ou parallélisme des deux glissières 15. Ce parallélisme est en outre davantage garanti, pendant le transport du module et son montage au pavillon du véhicule, par la traverse avant 2 reliant l'un à l'autre les deux premiers leviers 12 des deux paires des premiers et seconds leviers 12, 13.

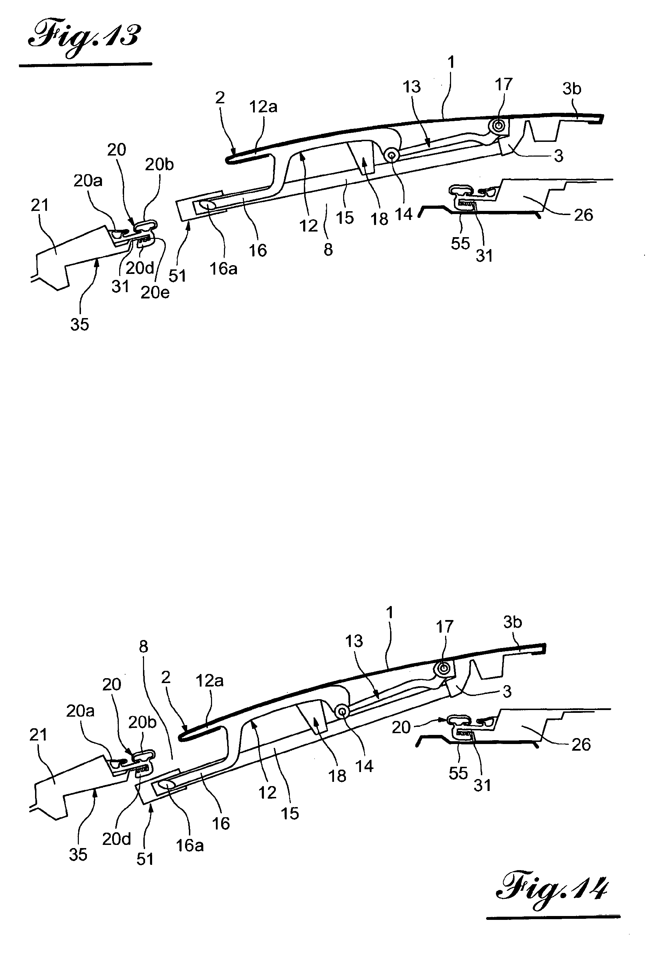

Le procédé de montage du module de toit souple de l'invention dans l'ouverture 8 du pavillon va être décrit en référence aux figures 13 et 14.

Avant de procéder au montage de ce module, un joint périphérique 20 en une seule pièce et comprenant les parties de joint externe 20a et interne 20b est fixé à la paroi périphérique 31 délimitant l'ouverture 8 du pavillon de manière que les deux parties de joint 20a, 20b soient logées dans la feuillure périphérique supérieure 30. A cet effet, le joint périphérique 20 comprend une embase 20d de support des deux parties de joint 20a, 20b comportant une rainure circulaire 20e dans laquelle est engagée la paroi périphérique 31 de manière que le joint 20 soit maintenu par pincement sur cette paroi.

Ensuite, le module de toit souple, dont les premier et second leviers 12, 13 de chaque paire de leviers sont maintenus à leur position en prolongement l'un de l'autre relativement à la glissière 15 par le verrou associé 18, est présenté au dessus de l'ouverture 8 du pavillon comme représenté en figure 13 puis la partie avant du module comportant les deux sabots 51 est inclinée vers le bas au travers de l'ouverture 8 comme représenté en figure 14. Le module est ensuite déplacé vers l'avant du véhicule jusqu'à ce que les sabots 51 soient situés sous la traverse avant 21 du pavillon pour permettre l'engagement du pion d'indexation 53 de l'un de ces sabots dans le perçage correspondant de la traverse 21 de manière à disposer les sabots dans la feuillure inférieure 35 de la traverse 21.

Ensuite, la traverse arrière 3 du module est basculée vers le bas vers la traverse arrière 26 du pavillon de manière à insérer les pions d'indexation 54 de la traverse 3 dans les perçages correspondant 55a de la paroi 55. Ainsi, le module de toit souple est parfaitement positionné par indexation relativement au pavillon du véhicule.

Enfin, les sabots 51 sont fixés par les vis 52 à la traverse avant 21 du pavillon et la traverse arrière 3 du module est fixée à la paroi 55 par les vis de fixation 56 comme représenté en figure 9 qui montre également que l'extrémité avant 12a de la traverse avant 2 et l'extrémité arrière 3b de la traverse arrière 3 sont en appui sur les deux parties de joint 20a, 20b du joint d'étanchéité 20.

Une fois le module de toit souple installé dans l'ouverture 8 du pavillon, le mécanisme à leviers 12, 13 peut être manoeuvré, après déverrouillage des verrous 18, pour déplacer le toile 1 entre sa position dans laquelle la toile 1 est tendue pour fermer l'ouverture 8 du pavillon et la position dans laquelle la toile 1 est repliée à l'arrière de l'ouverture 8 pour dégager cette ouverture.

En variante, un second module de toit souple identique à celui précédemment décrit, peut être monté derrière ce dernier au pavillon du véhicule pour permettre aux occupants de celui-ci d'ouvrir la quasi-totalité de la surface du pavillon.

Le module de toit souple de l'invention permet ainsi de supprimer le cadre de support pourvu des deux joints d'étanchéité comme décrit en référence aux figures 1 à 8. Par conséquent, le module de l'invention permet d'installer un toit souple au pavillon d'un véhicule encombrant moins l'ouverture 8 du pavillon. Du fait de l'absence du cadre du module des figures 1 à 8, le joint périphérique 20 peut être monté directement sur la paroi périphérique 31 bordant l'ouverture 8 du pavillon, ce qui permet, comme représenté en figure 15, de porter la largeur d à la largeur du joint lui même et qui peut être d'environ 35mm en comparaison à la largeur d d'environ 55mm de la figure 8. La figure 15 montre également que la dimension D de l'ouverture 8 du pavillon est agrandie d'une largeur périphérique pouvant aller jusqu'à 40mm de chaque côté de l'ouverture 8.

La solution de l'invention permet en outre un gain de temps de montage du module de pavillon du véhicule et un gain en poids d'environ 10% par rapport à la solution des figures 1 à 8.

La solution de l'invention est également moins coûteuse que la solution des figures 1 à 8 notamment à cause de l'absence de cadre de support. A titre d'exemple, le gain en coût peut aller jusqu'à 20%.

Enfin, le module de toit souple de l'invention peut être facilement transporté à son site d'installation sans risque de déréglage du parallélisme des deux glissières et peut être facilement monté au pavillon d'un véhicule en garantissant le parallélisme de ces glissières, assurant ainsi le bon fonctionnement du toit souple installé au pavillon du véhicule.

## Revendications

1. Module de toit souple pour véhicule automobile, destiné à être monté dans une ouverture (8) du pavillon du véhicule, **caractérisé en ce qu'**il comprend deux paires latérales de premiers et seconds leviers (12, 13), les premier et second leviers (12, 13) de chaque paire étant articulés l'un à l'autre, une traverse arrière (3) destinée à être fixée au voisinage du bord arrière transversal de l'ouverture (8) du pavillon, deux glissières parallèles (15) ayant deux de leurs extrémités fixées respectivement aux deux extrémités de la traverse arrière (3), deux sabots (51) solidaires respectivement des deux autres extrémités des deux glissières (15) et destinés à être fixés en-dessous du bord avant transversal de l'ouverture (8) du pavillon, et **en ce que** le premier levier (12) de chaque paire de premier et second leviers (12, 13) est engagé à coulissement dans l'une correspondante des deux glissières (15) tandis que le second levier (13) de chaque paire de premier et second leviers (12, 13) est monté articulé à une extrémité correspondante de la traverse arrière (3).

2. Module de toit souple selon la revendication 1, **caractérisé en ce que** les premiers leviers (12) des deux paires de premiers et seconds leviers (12, 13) sont reliés l'un à l'autre par une traverse avant (2).

3. Module de toit souple selon la revendication 1 ou 2, **caractérisé en ce que** la traverse arrière (3) comprend deux pions d'indexation (54) pouvant être insérés dans deux perçages (55a) d'une paroi (55) du pavillon située sensiblement au même niveau que la paroi de bord arrière transversal (31) de l'ouverture (8) du pavillon.

4. Module de toit souple selon l'une des revendications précédentes, **caractérisé en ce qu'**au moins l'un des deux sabots (51) comprend un pion d'indexation (53) pouvant être inséré dans un perçage du pavillon situé à proximité de la paroi de bord avant transversal (31) de l'ouverture (8) du pavillon.

5. Module de toit souple selon l'une des revendications précédentes, **caractérisé en ce que** le moyen de fixation de chaque glissière (15) à la traverse arrière (3) comprend un pion (50) solidaire de l'extrémité de la glissière (15) et emmanché à force dans un perçage de l'extrémité de la traverse arrière (3).

6. Module de toit souple selon l'une des revendications précédentes, **caractérisé en ce que** la traverse arrière (3) peut être fixée à une paroi (55) du pavillon située sensiblement au même niveau que la paroi de bord arrière transversal (31) de l'ouverture (8) du pavillon par deux vis de fixation (56) et chaque sabot (51) peut être fixé au pavillon à proximité de la paroi de bord avant transversal (31) de l'ouverture (8) du pavillon par une vis de fixation (52).

7. Module de toit souple selon l'une des revendications précédentes, **caractérisé en ce que** les premier et second leviers (12, 13) de chaque paire de premiers et seconds leviers (12, 13) occupent une position dans laquelle ces leviers sont situés dans le prolongement l'un de l'autre et sont verrouillés à cette position à la glissière correspondante (15) par un verrou (18) manoeuvrable manuellement.

8. Module de toit souple selon l'une des revendications précédentes, **caractérisé en ce qu'**il comprend une toile (1) recouvrant les premiers et seconds leviers (12, 13) des deux paires et dont le bord avant (1a) est fixé aux extrémités avant (12a) des premiers leviers (12) et le bord arrière (1b) est fixé à la traverse arrière (3).

9. Procédé de montage du module de toit souple, tel que défini dans l'une quelconque des revendications 1 à 8, dans une ouverture (8) du pavillon d'un véhicule automobile, **caractérisé en ce qu'**il consiste à fixer un joint périphérique d'étanchéité (20) à la paroi de bord périphérique (31) de l'ouverture (8) du pavillon, présenter le module au-dessus de l'ouverture (8) du pavillon, basculer vers le bas les sabots (51) des glissières (15) du module pour permettre le passage des sabots (51) sous la paroi de bord avant transversal (31) de l'ouverture (8) du pavillon, engager le pion d'indexation (53) de l'un des sabots (51) dans un perçage du pavillon situé à proximité de la paroi de bord avant transversal 31), basculer vers le bas la traverse arrière (3) de manière à engager les pions (54) de cette traverse dans des perçages (55a) d'une paroi (55) du pavillon située sensiblement au même niveau que la paroi de bord arrière transversal (31) de l'ouverture (8) du pavillon et amener les traverses avant (2) et arrière (3) en appui sur le joint d'étanchéité (20), et fixer les sabots (51) et la traverse arrière (3) au pavillon.

10. Procédé selon la revendication 9, **caractérisé en ce qu'**il consiste à fixer les sabots (51) des glissières (15) dans une feuillure inférieure (35) d'une traverse avant (21) du pavillon et à fixer la traverse arrière (3) du module à la paroi transversale (55) fixée sous une traverse arrière (26) du pavillon.

11. Procédé selon la revendication 9 ou 10, **caractérisé en ce que** le joint périphérique d'étanchéité (20) est logé dans une feuillure périphérique supérieure (30) bordant l'ouverture (8) du pavillon.

12. Procédé selon l'une des revendications 9 à 11, **caractérisé en ce que**, lors du montage du module, les premier et second leviers (12, 13) de chaque paire de leviers sont verrouillés dans leur position en prolongement l'un de l'autre à la glissière correspondante (15) par le verrou (18).

13. Véhicule automobile dont le pavillon est équipé d'au moins un toit souple installé à partir du module de toit souple selon l'une des revendications 1 à 8.

## Patentansprüche

1. Faltdachmodul für Kraftfahrzeug, das ausgelegt ist, um in einer Öffnung (8) des Fahrzeugdachs montiert zu sein, **dadurch gekennzeichnet, dass** es zwei seitliche Paare von ersten und zweiten Hebeln (12, 13) umfasst, wobei die ersten und zweiten Hebel (12, 13) von jedem Paar miteinander gelenkig verbunden sind, eine hintere Traverse (3), die ausgelegt ist, um in der Nähe des hinteren Querrands der Öffnung (8) des Dachs befestigt zu sein, zwei parallele Schieber (15), von denen zwei Enden jeweils an die zwei Enden der hinteren Traverse (3) befestigt sind, zwei Schuhe (51), die jeweils mit den zwei anderen Enden der zwei Schieber (15) fest verbunden und ausgelegt sind, um unter dem vorderen Querrand der Öffnung (8) des Dachs befestigt zu sein, und dadurch, dass der erste Hebel (12) von jedem Paar von ersten und zweiten Hebeln (12, 13) gleitend in einen entsprechenden der zwei Schieber (15) eingegriffen ist, während der zweite Hebel (13) von jedem Paar von ersten und zweiten Hebeln (12, 13) gelenkig auf einem entsprechenden Ende der hinteren Traverse (3) montiert ist.

2. Faltdachmodul nach Anspruch 1, **dadurch gekennzeichnet, dass** die ersten Hebel (12) der zwei Paare von ersten und zweiten Hebeln (12, 13) miteinander durch eine vordere Traverse (2) verbunden sind.

3. Faltdachmodul nach Anspruch 1 oder 2, **dadurch gekennzeichnet, dass** die hintere Traverse (3) zwei Indexierungsstifte (54) umfasst, die in zwei Bohrungen (55a) einer Wand (55) des Dachs eingeführt werden können, die sich im Wesentlichen auf der gleichen Ebene wie die Wand des hinteren Querrands (31) der Öffnung (8) des Dachs befinden.

4. Faltdachmodul nach einem der vorhergehenden Ansprüche, **dadurch gekennzeichnet, dass** mindestens einer der zwei Schuhe (51) einen Indexierungsstift (53) umfasst, der in eine Bohrung des Dachs eingeführt werden kann, die sich in der Nähe der Wand des vorderen Querrands (31) der Öffnung (8) des Dachs befindet.

5. Faltdachmodul nach einem der vorhergehenden Ansprüche, **dadurch gekennzeichnet, dass** das Befestigungsmittel von jedem Schieber (15) an die hintere Traverse (3) einen Stift (50) umfasst, der fest mit dem Ende des Schiebers (15) verbunden ist und in eine Bohrung des Endes der hinteren Traverse (3) pressgepasst ist.

6. Faltdachmodul nach einem der vorhergehenden Ansprüche, **dadurch gekennzeichnet, dass** die hintere Traverse (3) an eine Wand (55) des Dachs, die sich im Wesentlichen auf der gleichen Ebene wie die Wand des hinteren Querrands (31) der Öffnung (8) des Dachs befindet, durch zwei Befestigungsschrauben (56) befestigt werden kann, und jeder Schuh (51) an das Dach in der Nähe der Wand des vorderen Querrands (31) der Öffnung (8) des Dachs durch eine Befestigungsschraube (52) befestigt werden kann.

7. Faltdachmodul nach einem der vorhergehenden Ansprüche, **dadurch gekennzeichnet, dass** die ersten und zweiten Hebel (12, 13) von jedem Paar von ersten und zweiten Hebeln (12, 13) eine Position einnehmen, in der sich diese Hebel in der Verlängerung voneinander befinden und an diese Position an den entsprechenden Gleiter (15) durch eine Verriegelung (18) verriegelt sind, die manuell gehandhabt werden kann.

8. Faltdachmodul nach einem der vorhergehenden Ansprüche, **dadurch gekennzeichnet, dass** es einen Stoff (1) umfasst, der die ersten und zweiten Hebel (12, 13) der zwei Paare bedeckt, und dessen vorderer Rand (1a) an die vorderen Enden (12a) der ersten Hebel (12) und hinterer Rand (1 b) an die hintere Traverse (3) befestigt ist.

9. Verfahren zur Montage des Faltdachmoduls, wie in einem der Ansprüche 1 bis 8 definiert, in einer Öffnung (8) des Dachs eines Kraftfahrzeugs, **dadurch gekennzeichnet, dass** es darin besteht, eine Umfangsdichtung (20) an die Wand des Umgebungsrands (31) der Öffnung (8) des Dachs zu befestigen, das Modul über der Öffnung (8) des Dachs anzuordnen, die Schuhe (51) der Schieber (15) des Moduls nach unten zu kippen, um den Durchgang der Schuhe (51) unter der Wand des vorderen Querrands (31) der Öffnung (8) des Dachs zu ermöglichen, den Indexierungsstift (53) eines der Schuhe (51) in eine Bohrung des Dachs einzugreifen die sich in der Nähe der Wand des vorderen Querrands (31) befindet, die hintere Traverse (3) nach unten zu kippen, um die Stifte (54) dieser Traverse in Bohrungen (55a) einer Wand (55) des Dachs einzugreifen, die sich im Wesentlichen auf der gleichen Ebene wie die Wand des hinteren Querrands (31) der Öffnung (8) des Dachs befinden, und die vorderen (2) und hinteren (3) Traversen auf die Dichtung (20) in Auflage zu bringen die Schuhe (51) und die hintere Traverse (3) an das Dachs zu befestigen.

10. Verfahren nach Anspruch 9, **dadurch gekennzeichnet, dass** es darin besteht, die Schuhe (51) der Schieber (15) in einem unteren Anschlag (35) einer vorderen Traverse (21) des Dachs zu befestigen und die hintere Traverse (3) des Moduls an die Querwand (55) zu befestigen, die unter der hinteren Traverse (26) des Dachs befestigt ist.

11. Verfahren nach Anspruch 9 oder 10, **dadurch gekennzeichnet, dass** die Umfangsdichtung (20) in einem oberen Umfangsanschlag (30) aufgenommen ist, der die Öffnung (8) des Dachs umgibt.

12. Verfahren nach einem der Ansprüche 9 bis 11, **dadurch gekennzeichnet, dass** bei der Montage des Moduls die ersten und zweiten Hebel (12, 13) von jedem Paar von Hebeln in ihrer Position in der Verlängerung voneinander an den entsprechenden Schieber (15) durch die Verriegelung (18) verriegelt sind.

13. Kraftfahrzeug, dessen Dach mit mindestens einem Faltdach ausgestattet ist, das auf der Grundlage des Faltdachmoduls gemäß einem der Ansprüche 1 bis 8 installiert ist.

## Claims

1. Flexible roof module for a motor vehicle intended to be mounted into an opening (8) of the top of the vehicle, **characterised in that** it includes two side pairs of first and second levers (12, 13), the first and second levers (12, 13) of each pair being articulated with each other, a rear crosspiece (3) intended to be attached near the rear transverse edge of the top opening (8), two parallel slides (15) having two of the ends thereof attached to the two ends of the rear crosspiece (3) respectively, two pads (51) secured to the two other ends of the two slides (15) respectively and intended to be attached under the front transverse edge of the top opening (8), and wherein the first lever (12) of each pair of first and second levers (12, 13) slides in a corresponding slide of the two slides (15), whereas the second lever (13) of each pair of first and second levers (12, 13) is mounted and articulated with a corresponding end of the rear crosspiece (3).

2. A flexible roof module according to claim 1, **characterised in that** the first levers (12) of the two pairs of first and second levers (12, 13) are connected to each other by a front crosspiece (2).

3. A flexible roof module according to claim 1 or 2, **characterised in that** the rear crosspiece (3) comprises two indexing pins (54) capable of being inserted into two borings (55a) of a wall (55) of the top located substantially at the same level as the rear transverse edge wall (31) of the top opening (8).

4. A flexible roof module according to one of the previous claims, **characterised in that** at least one of the two pads (51) comprises an indexing pin (53) capable of being inserted into a boring of the top located near to the front transverse edge wall (31) of the top opening (8).

5. A flexible roof module according to one of the previous claims, **characterised in that** the fixing means for attaching each slide (15) to the rear crosspiece (3) comprises a pin (50) secured to the end of the slide (15) and bonded by force in a boring of the end of the rear crosspiece (3).

6. A flexible roof module according to one of the previous claims, **characterised in that** the rear crosspiece (3) can be attached to a wall (55) of the top located substantially at the same level as the rear transverse edge wall (31) of the top opening (8) by two fixing screws (56) and each pad (51) can be attached to the top near to the front transverse edge wall (31) of the top opening (8) by a fixing screw (52).

7. A flexible roof module according to one of the previous claims, **characterised in that** the first and second levers (12, 13) of each pair of first and second levers (12, 13) occupy a position in which these levers are located in the extension of each other and are locked in this position to the corresponding slide (15) by a manually controllable latch (18).

8. A flexible roof module according to one of the previous claims, **characterised in that** it comprises a web (1) covering the first and second levers (12, 13) of the two pairs and of which the front edge (1 a) is attached to the front ends (12a) of the first levers (12) and of which the rear edge (1 b) is attached to the rear crosspiece (3).

9. A method for mounting the flexible roof module, as defined in any one of claims 1 to 8, in an opening (8) of the top of a motor vehicle, **characterised in that** it consists in attaching a peripheral seal (20) to the peripheral edge wall (31) of the top opening (8), in presenting the module above the top opening (8), in moving the pads (51) of the slides (15) of the module in a downwards direction to enable the pads (51) to pass under the front transverse edge wall (31) of the top opening (8), in engaging the indexing pin (53) of one of the pads (51) in a boring of the top located near to the front transverse edge wall (31), in moving the rear crosspiece (3) in a downwards direction so as to engage the pins (54) of this crosspiece in the borings (55a) of a wall (55) of the top located substantially at the same level as the rear transversal edge wall (31) of the top opening (8) and bring the front (2) and rear (3) crosspieces at rest against the seal (20), and in attaching the pads (51) and the rear crosspiece (3) to the top.

10. A method according to claim 9, **characterised in that** it consists in attaching the pads (51) of the slides (15) in a lower rabbet (35) of a front crosspiece (21) of the top and in attaching the rear crosspiece (3) of the module to the transverse wall (55) attached under a rear crosspiece (26) of the top.

11. A method according to claim 9 or 10, **characterised in that** the peripheral seal (20) is housed in an upper peripheral rabbet (30) bordering the top opening (8).

12. A method according to one of claims 9 to 11, **characterised in that**, when assembling the module, the first and second levers (12, 13) of each pair of levers are locked in their position in extension of each other to the corresponding slide (15) by the latch (18).

13. A motor vehicle, the top of which is equipped with at least one flexible roof installed based on the flexible roof module according to one of claims 1 to 8.
